Europäisches Patentamt

European Patent Office

Office européen des brevets

(11) Veröffentlichungsnummer: **0 256 330 B1**

(19)

(12) # EUROPÄISCHE PATENTSCHRIFT

(45) Veröffentlichungstag der Patentschrift: **29.01.92**

(21) Anmeldenummer: **87110509.4**

(22) Anmeldetag: **21.07.87**

(51) Int. Cl.⁵: **C04B 24/28**, C04B 28/14, C04B 41/63, //(C04B28/14, 18:24,24:28)

(54) **Verstärkte Gipsplatten.**

(30) Priorität: **01.08.86 DE 3626048**

(43) Veröffentlichungstag der Anmeldung:
**24.02.88 Patentblatt 88/08**

(45) Bekanntmachung des Hinweises auf die
Patenterteilung:
**29.01.92 Patentblatt 92/05**

(84) Benannte Vertragsstaaten:
**AT BE CH DE ES FR GB IT LI NL SE**

(56) Entgegenhaltungen:
**EP-A- 0 023 579**
**DE-B- 2 919 311**
**GB-A- 2 026 500**

(73) Patentinhaber: **BAYER AG**

**W-5090 Leverkusen 1 Bayerwerk(DE)**

(72) Erfinder: **Kossatz, Gert, Prof. Dr. Ing.**
**Im Gettelhagen 156**
**W-3300 Braunschweig(DE)**
Erfinder: **Sattler, Heinz, Dr.**
**Diercke-Strasse 10**
**W-3300 Braunschweig(DE)**
Erfinder: **Kammerer, Rüdiger, Dipl.-Ing.**
**Königin-Sophie-Strasse 8**
**W-5340 Bad Honnef 1(DE)**
Erfinder: **Sachs, Hanns Immo, Dipl.-Ing.**
**Semmelweissstrasse 149**
**W-5000 Köln 80(DE)**
Erfinder: **Schäpel, Dietmar, Dr.**
**Johanniterstrasse 15**
**W-5000 Köln 80(DE)**

EP 0 256 330 B1

## Beschreibung

Die Erfindung betrifft ein Verfahren zur Herstellung von verstärkten Gipsplatten aus Gips(-Halbhydrat), und Holzspänen unter Zumischung von Polyisocyanaten bei der Herstellung von Gipsplatten und/oder Aufbringen von Polyisocyanaten auf die Oberfläche der Gipsplatten.

Die Erfindung betrifft ferner Polyharnstoff-modifizierte, verstärkte Gipsplatten aus Gips(-Halbhydrat), Holzspänen und Polyisocyanaten, mit verbesserter Festigkeit, Wasserfestigkeit und Biegefestigkeit der Gipsplatten.

Wegen ihrer vorteilhaften Eigenschaften werden Gipsplatten heute in großem Umfang im Bauwesen verwendet, insbesondere im sogenannten trockenen Innenausbau. Gebräuchlich sind Gipsplatten, die zur Verringerung ihrer Sprödbruchneigung Kartonbeschichtungen aufweisen oder Celluloseteilchen homogen eingemischt enthalten. Eine neue Variante von Gipsplatten stellen die in der DE-B 29 19 311 beschriebenen Holz-Gipsplatten dar, die homogen mit Holzspänen armiert sind (sogenannte Holz-Gipsplatten).

Schwierigkeiten mit diesen gegebenenfalls bewehrten Gipsplatten treten jedoch bei deren Verwendung in sogenannten Feuchträumen auf, z.B. im Keller-, Sanitär- und Küchenbereich. Diese Probleme beruhen darauf, daß die Gipsplatten durch Wasser anquellen und in der Folge zerfallen.

Zur Behebung dieser Schwierigkeiten ist empfohlen worden, die Gipsplatten mit Paraffinen zu imprägnieren. Diese Methode ergibt jedoch nur eine begrenzte wasserabweisende Wirkung, da die Paraffine nur adsorbtiv gebunden sind.

Es wurde nun gefunden, daß man durch Bewehrungsstoffe, bevorzugt durch Cellulose-Teilchen verstärkte Gipsplatten mit einer verbesserten Wasserfestigkeit und gleichzeitig einer erhöhten Biegefestigkeit erhält, wenn man beim Herstellen der Gipsplatten Polyisocyanate zumischt und/oder auf die Oberfläche von gefertigten Gipsplatten Polyisocyanate aufbringt und Holzspäne verwendet.

Gegenstand der Erfindung ist demnach ein Verfahren zur Herstellung von verstärkten Gipsplatten durch Vermischen von Gips-Halbhydrat, Wasser sowie Holzspänen und anschließendes Verpressen der erhaltenen Mischung, dadurch gekennzeichnet, daß man Polyisocyanate der Mischung zur Herstellung der Gipsplatten zusetzt und/oder auf die Oberfläche der vorgefertigten Gipsplatten aufbringt und Holzspäne mit einer Länge von 1 bis 10 mm verwendet und das Gewichtsverhältnis von Holzspäne zu Gips-Halbhydrat 0,25 : 1 bis 0,35 : 1 beträgt.

Gegenstand der Erfindung sind ferner verstärkte Gipsplatten auf Basis von Holzspänen mit einer Länge von 1 bis 10 mm, Gips-Halbhydrat, und Polyisocyanaten, welche die aus den Polyisocyanaten sich bildenden Polyharnstoffe homogen über den Plattenquerschnitt verteilt oder in den Plattenrandzonen angereichert enthalten.

Die in den erfindungsgemäßen Gipsplatten enthaltenen Polyharnstoffe bilden sich aus den zugefügten Polyisocyanaten. Als Polyisocyanate kommen für die Herstellung von Polyurethanen an sich bekannten Polyisocyanaten in Betracht, das heißt, es kommen aliphatische, cycloaliphatische, araliphatische, aromatische und heterocyclische Polyisocyanate in Betracht, wie sie z.B. von W. Siefken in Liebig's Annalen der Chemie, Band 562, Seiten 75 bis 136, beschrieben werden, sowie deren Modifizierungs-produkte,durch Einführung von z.B. Allophanat-, Biuret-, Urethan- oder Hexahydrotriazin-Gruppen.

Bevorzugte Polyisocyanate sind im allgemeinen die verschiedenen Toluylendiisocyanate, Diphenylmethandiisocyanate und insbesondere Polymethylenpolyphenylpolyisocyanate sowie Gemische aus diesen Isocyanat-Arten.

Weiterhin bevorzugte Polyisocyanate sind solche, die durch Zusatz von Emulgatoren oder durch Modifizierung mit z.B. Sulfonsäuregruppen wasseremulgierbar sind.

Solche durch Zusatz von Emulgatoren wasserdispergierbar eingestellte Polyisocyanate sind z.B. in der DE-A-2921681 beschrieben. Durch Sulfonsäuren emulgierfähig modifizierte Polyisocyanate sind aus DE-A 2441843 und EP-A 19859 bekannt. Weiterhin können wässrige Emulsionen gemäß EP-A 0 084 313, bestehend aus Polyisocyanaten und wässrigen Paraffin-Dispersionen, oder mit Phosphorsäurediester modifizierte Polyisocyanate entsprechend DE-A -3108538 oder Polyethylenglykol- oder Polyethylenglykolmonoalkylether-modifizierte oder mit Leim, Polyvinylalkohol oder Polyvinylpyrrolidon modifizierte Polyisocyanate bei der Herstellung der erfindungsgemäßen Gipsplatten verwendet werden.

Erfindungsgemäß bevorzugt werden, wie schon erwähnt, technische Polyphenyl-polymethylen-Polyisocyanate als Isocyanatkomponente des Bindemittels eingesetzt. In diesem Zusammenhang hat es sich insbesondere bewährt (s. DE-A 27 11 958) als Isocyanatkomponente das Phosgenierungsprodukt der nicht destillierten Bodenfraktion einzusetzen, wie sie bei der Entfernung von 25 bis 90 Gew.-%, vorzugsweise 30 bis 85 Gew.-%, an 2,2'-, 2,4'-und/oder 4,4'-Diaminodiphenylmethan aus einem Anilin/-Formaldehyd-Kondensat entsteht, oder aber jene nicht destillierte Bodenfraktion einzusetzen, wie sie bei der Enfernung von 25 bis 90 Gew.-%, vorzugsweise 30 bis 85 Gew.-%, an 2,2'-, 2,4'-und/oder 4,4'-Diisocyanatodiphenylmethan aus dem rohen Phosgenierungsprodukt eines Anilin/Formaldehyd-Kondensats erhalten wurde, wobei das Polyisocyanat 35 bis 70 Gew.-%, vorzugsweise 45 bis 60 Gew.-%, an Diisocyanatodiphenylmethanen enthält, wobei der Gehalt an 2,4'-Diisocyanatodiphenylmethan zwischen 1 und 8 Gew.-%, vorzugsweise zwischen 2 und 5 Gew.-%, und der Gehalt an 2,2'-Diisocyanatodiphenylmethan zwischen 0 und 2 Gew.-% beträgt, und wobei das Polyisocyanat eine Viskosität bei 25 °C von 50 bis 600 mPas, vorzugsweise 200 bis 500 mPas, und einen NCO-Gehalt zwischen 28 und 32 Gew.-% aufweist.

Wie aus dem oben Gesagten hervorgeht, werden derartige Bodenfraktionen beispielsweise bei der entfernung von 45 bis 90 Gew.-%, vorzugsweise 55 bis 85 Gew.-%, an 4,4'-Diisocyanato-diphenylmethan aus einem rohen Diphenylmethandiisocyanat erhalten, welches mehr als 85 Gew.-%, vorzugsweise mehr als 90 Gew.-%, and 4,4'-Diisocyanatodiphenylmethan enthält. Ein solches rohes Diphenylmethandiisocyanat ist beispielsweise nach dem Verfahren der DE-A 2 356 828 zugänglich.

Eine andere Möglichkeit besteht darin, aus einem rohen Phosgenierungsprodukt mit einem Gehalt an Diisocyanatodiphenylmethanisomeren von 60 bis 90 Gew.-%, vorzugsweise 65 bis 75 Gew.-%, welches 20 bis 60, vorzugsweise 30 bis 40 Gew.-%, an 2,4'-Isomeren enthält, 25 bis 80 Gew.-%, vorzugsweise 30 bis 60 Gew.-%, an 2,4'-Diisocyanatodiphenylmethan und gegebenenfalls 4,4'- bzw. 2,2'-Diisocyanatodiphenylmethan abzudestillieren. In jedem Falle kann dabei die Destillation so geführt werden, daß der Rückstand die gewünschte Zusammensetzung aufweist.

Selbstverständlich ist es jedoch auch möglich (und in vielen Fällen in der Praxis auch einfacher), die gewünschte Isomeren- bzw. Oligomerenzusammensetzung des Polyphenyl-Polymethylen-Polyisocyanats durch Verschneiden verschiedener Bodenfraktionen zu erreichen.

Der Gehalt der bei der Herstellung der erfindungsgemäßen Gipsplatten einzusetzenden Polyisocyanate beträgt 1 - 10 Gew.-%, vorzugsweise 2 - 8 Gew.-%, besonders bevorzugt 3 -7 Gew.-%, bezogen auf das Gesamtgewicht aus trockenen Einsatzstoffen (Bewehrungsstoffe und Gipsbindemittel; vorzugsweise Gips-Halbhydrat).

Als die bei der Herstellung der erfindungsgemäßen Gipsplatten als Bewehrungsstoffe zu verwendenden Teilchen kommen Holzspäne aus z.B. Fichte, Tanne, Eiche oder Kiefer, mit Längen von 1 mm bis 10 mm, infrage.

Die zur Herstellung der erfindungsgemäßen Gipsplatten einsetzbaren Gipse können alle technischen oder reinen Gipse sein, (bevorzugt sind technische Gipse, die aus den natürlichen Gipsen wie Zechsteingips, Keupergips oder Muschelkalkgips sowie aus industriell zwangsweise anfallenden Gipse) die durch einen Brennvorgang als Halbhydrat erhalten werden.

Erfindungsgemäß können bei der Herstellung der Gipsplatten Zusatzstoffe wie z.B. Gips-Beschleuniger, -Verzögerer, -Härter oder Verflüssigungs- und Fließmaterial sowie Farbstoffe mitverwendet werden.

Die Herstellung der erfindungsgemäß beanspruchten Gipsplatten kann nach verschiedenen Verfahrensweisen erfolgen, die sich kontinuierlich oder diskontinuierlich gestalten lassen. Wenn eine über den gesamten Plattenquerschnitt wasserfeste Gipsplatte erwünscht ist, kann man z.B. mit Wasser angefeuchtete Holzspäne mit der gewünschten Menge an Polyisocyanaten benetzen und dann Gips in Pulverform zumischen. Das erhaltene Gemisch wird auf eine plane Fläche durch Streuen verteilt und anschließend mittels einer Pressvorrichtung so stark komprimiert, daß eine im getrockneten Zustand die Dichte von 0,4-1,8 $g/cm^3$, z.B. 1,1 $g/cm^3$ aufweisende Gipsplatte erhalten wird.

Eine Gipsplatte, die aus Kostengründen nur wasserfeste Randzonen aufweisen soll, läßt sich grundsätzlich nach zwei Methoden herstellen. Bei der einen Verfahrensweise wird zunächst eine Polyisocyanat-haltige Mischung aus z.B. feuchten Holzspänen und Gips in dünner Schicht ausgestreut, darüber wird eine starke Schicht einer Polyisocyanat-freien Mischung aus feuchten Holzspänen und Gips aufgebracht und schließlich folgt nochmals eine Polyisocyanat-haltige dünne Schicht. Dieser Schichtenaufbau wird dann zu einer Platte verpreßt und anschließend getrocknet. Bei der anderen Methode werden die Randzogen einer ohne Verwendung von Polyisocyanat gefertigten, mit Holzspänen verstärkten Gipsplatte dadurch wasserfest gemacht, daß man auf die Plattenoberflächen vorzugsweise eine wässrige Dispersion von Polyisocyanaten, z.B. durch Streichen, Rollen, Sprühen oder auch durch einen Tauchvorgang, aufbringt und nachfolgend die Gipsplatten trocknet.

Bei diesen Verfahrenweisen kann die Förderung, Dosierung und Mischung der Einzelkomponenten mit den für den Fachmann an sich bekannten Vorrichtungen erfolgen. Die Förderung und die Dosierung der Polyisocyanate, beziehungsweise deren wässrige Dispersionen sind mit den in der Polyurethan-Technologie üblicherweise verwendeten Aggregaten möglich. Das Aufstreuen der Mischung aus z.B. feuchten Holzspänen, Gips und Polyisocyanaten kann kontinuierlich auf einer in der Platten-herstellenden Industrie an sich bekannten Bandanlage durchgeführt werden. Zum Verpressen der Gipsmischungen zu erfindungsgemäßen Platten sind Stapelpressen oder Etagenpressen bei diskontinuierlicher und Durchlaufpressen bei kontinuierlicher Arbeitsweise verwendbar.

Mit Hilfe des erfindungsgemäßen Verfahrens werden durch Holzspäne und durch Polyharnstoffe (aus den Polyisocyanaten) verstärkte Gipsplatten erhalten, die eine hohe und wesentlich verbesserte Wasserfestigkeit bei gleichzeitig erhöhter Biegefestigkeit aufweisen. Die neuen Gipsplatten sind somit nicht nur für den sogenannten "trockenen" Innenausbau, sondern auch für den Einbau in sogenannten "Feuchträumen" geeignet.

Die nachfolgenden Beispiele erläutern die vorliegende Erfindung. Bei den in den Beispielen angegebenen Teilen handelt es sich um Gewichtsteile, sofern nichts anderes angegeben ist.

In den Beispielen verwendete Polyisocyanate:
Polyisocyanat A
= Polymethylenpolyphenylpolyisocyanat
Vom rohen Phosgenierungsprodukt eines Anilin/Formaldehyd-Kondensats wird so viel Diisocyanatophenylmethan abdestilliert, daß der Destillationsrückstand eine Viskosität von 100 mPas/25 °C aufweist (2-Kernanteil: 59,7 %; 3-Kernanteil: 21,3 %; Anteil an höherkernigen Polyisocyanaten: 19,0 %)
Polyisocyanat B
= Polymethylenpolyphenylpolyisocyanat
Entsprechend wie Polyisocyanat A hergestelltes Polyisocyanat mit einer Viskosität von 400 mPas/25 °C (2-Kernanteil: 45,1 %; 3-Kernanteil: 22,3 %; Anteil an höherkernigen Polyisocyanaten: 32,6 %).
Polyisocyanat C
= Polyisocyanat B, das durch Zusatz von 5 Gew.-% Emulgator wasseremulgierbar modifiziert worden ist.

Beispiel 1

17,6 Teile Fichtenholz-Späne mit einem Feuchtegehalt von 10 Gew.-% und 3 - 7 mm Länge wurden unter Rühren mit einem Schneebesen mit 23,6 Teilen Wasser angefeuchtet. Unter weiterem Rühren wurden 5 Teile Polyisocyanat A zugetropft und innerhalb von 1 Minute mit den feuchten Holzspänen vermischt. Anschließend wurden 58,8 Teile Gips-Halbhydrat in Pulverform zugefügt und innerhalb von 30 Sekunden homogen verrührt.

78,8 Teile der erhaltenen Mischung wurden innerhalb von 30 Sekunden in eine Holzform mit der Grundfläche von 4 cm × 13 cm eingestreut und mit einm Stempel auf eine Höhe von 10,5 mm zusammengepreßt. Nach 20 Minuten Preßzeit wurde der Probekörper entformt und bei Raumtemperatur 5 Tage gelagert.

Der Probekörper hatte eine Dichte von 1,14 g/cm³ und besaß eine Biegefestigketi, gemessen in Anlehnung an DIN 53 452, von 11,2 N/mm². Die Wasseraufnahme des Materials wurde bestimmt, indem man den Probekörper in der Weise zerschnitt, daß 2 Platten von je 130 × 5,2 mm Größe erhalten wurden, und man die Platten unter Wasser lagerte. nach 2 Stunden Wasserlagerung betrug die Gewichtszunahme der Platten 4,2 %, nach 24 Stunden 11,2 %.

Beispiel 2

17,6 Teile Fichtenholz-Späne mit einem Feuchtgehalt von 10 Gew.-% und einer Länge von 3 - 7 mm wurden unter Rühren mit einem Schneebesen mit 29,5 Teilen Wasser angefeuchtet. Unter weiterem Rühren wurden 2 Teile Polyisocyanat B innerhalb von 15 Sekunden tropfenweise zugefügt und innerhalb von 1 Minute mit den feuchten Holzspänen vermischt. Anschließend wurden unter weiterem Rühren 58,8 Teile gebrannter Gips (CaSO$_4$ • 1/2 H$_2$O) in Pulverform zugefügt und innerhalb von 30 Sekunden mit den Isocyanat-benetzten feuchten Holzspänen gleichmäßig vermischt.

77,9 Teile der erhaltenen Mischung wurden innerhalb von 40 Sekunden in eine Holzform mit der Grundfläche von 13 cm × 4 cm eingestreut und mittels eines Stempels auf eine Höhe von 11 mm zusammengepreßt.

Nach 20 Minuten Presszeit wurde der 13 cm × 4 cm × 1,1 cm große Probekörper entformt und 5 Tage bei Raumtemperatur getrocknet.

Der erhaltene Probekörper wies eine Rohdichte von 1,1 g/cm³ auf und hatte eine Biegefestigkeit, gemessen in Anlehnung an DIN 53 452, von 9,5 N/mm². Die Wasseraufnahme des Materials bei vollständiger Lagerung unter Wasser, wie in Beispiel 1 beschrieben, betrug:
nach 2 Stunden 8 Gewichtsprozent,
nach 24 Stunden 11 Gewichtsprozent.

Beispiel 3

Man verfährt wie in Beispiel 2 beschrieben, aber anstelle von Polyisocyanat A wird die gleiche Menge an Polyisocyanat C eingesetzt.

Der erhaltene Probekörper hatte eine Dichte von 1,1 g/cm³ und wies eine Biegefestigkeit, gemessen in Anlehnung an DIN 53 452, von 9,2 N/mm² auf. Die Wasseraufnahme, gemessen wie in Beispiel 1 beschrieben, betrug nach 2 Stunden 11 Gew.-% und nach 24 Stunden 17 Gew.-%.

Beispiel 4

264 Teile Fichtenholz-Späne, die eine mittlere Dicke von 0,15 mm und eine Länge von 3 - 7 mm aufwiesen und einen Feuchtegehalt von 10 Gew.-% hatten, und 442 Teile Wasser wurden in einem 20 l-Rührkessel mit einem Schneebesen innerhalb von 2 Minuten vermsicht. Zu diesen angefeuchteten Spänen wurden unter Rührn 30 Teile Polyisocyanat A innerhalb von 30 Sekunden zugegeben. Danach mischte man innerhalb von weiteren 40 Sekunden 882 Teile pulvriges Gips-Halbhydrat hinzu.

1323 Teilie der erhaltenen Mischung wurden innerhalb von 60 Sekunden auf eine Fläche von 30 cm × 30 cm von Hand aufgestreut und in einer Presse auf eine Höhe von 10 mm zusammengepreßt. Nach 20 Minuten Presszeit wurde die Probeplatte der Presse entnommen und nach 5 tagen Lagerzeit bei Raumtemperatur wurden die folgenden Werte an der getrockneten Gipsplatte ermittelt:
Plattenstärke: 11mm,
Rohdichte: 1,18 g/cm$^3$,
Biegefestigkeit, gemessen in Anlehnung an DIN 53 452:
11,3 N/mm$^2$,
Wasseraufnahme des Plattenmaterials, gemessen wie in Beispiel 1 beschrieben:
nach 2 Stunden 10 Gew.0%,
nach 24 Stunden 14 Gew.-%.

Beispiel 5 (Vergleich)

Die Komponenten Holzspäne, Wasser und Gips-Halbhydrat wurden nach der in Beispiel 4 beschriebenen Weise gemischt, aber ohne ein Polyisocyanat hinzuzufügen. Mit 1348 Teilen der erhaltenen Mischung wurde nach der in Beispiel 4 beschriebenen Weise eine Gipsplatte hergestellt. Diese Platte wies folgende Werte auf:
Plattenstärke: 11 mm,
Rohdichte: 1,1 g/cm$^3$,
Biegefestigkeit, gemessen in Anlehnung an DIN 53 452:
5,8 N/mm$^2$,
Wasseraufnahme, gemessen wie in Beispiel 1 beschrieben:
nach 2 Stunden 30 Gew.-%,
nach 24 Stunden 37 Gew.-%.

Beispiel 6

Eine Gipsplatte, aus einer Mischung gemäß Beispiel 5 hergestellt (Plattenstärke 11 mm, Rohdichte 1,1 g/cm$^3$), wurde mit einer Dispersion aus 40 Teilen Polyisocyanat C und 60 Teilen Wasser mittels eines Pinsels gleichmäßig bestrichen, wobei die Auftragsmenge an Dispersion 1354 g/m$^2$ betrug.

Nach einer offenen Lagerung der behandelten Gipsplatte von 5 Tagen bei Raumtemperatur wurde ein Kunststoffring von 2 cm Höhe und 8,4 cm innerem Durchmesser auf die behandelte Oberfläche aufgelegt und mit dauerplastischer Siliconmasse gegenüber der Plattenoberfläche abgedichtet. In den Kunststoffring wurde Wasser bis zu 1 cm Höhe eingefüllt und die Wasseraufnahme durch die behandelte Oberfläche ermittelt.

Die Wasseraufnahme betrug nach 1 Stund 18

g/m$^2$ und nach 24 Stunden 415 g/m$^2$ behandelter Plattenoberfläche.

## Patentansprüche

1. Verfahren zur Herstellung von verstärkten Gipsplatten, durch Vermischen von Gips-Halbhydrat, Wasser sowie Holzspänen und anschließendes Verpressen der erhaltenen Mischung, dadurch gekennzeichnet, daß man Polyisocyanate der Mischung zur Herstellung der Gipsplatten zusetzt und/oder auf die Oberfläche von gefertigten Gipsplatten aufbringt und daß Holzspäne mit einer Länge von 1 - 10 mm verwendet werden und das Gewichtsverhältnis von Holzspänen zu Gips-Halbhydrat 0,25 : 1 bis 0,35 : 1 beträgt.

2. Verfahren gemäß Anspruch 1, dadurch gekennzeichnet, daß das Polyisocyanat ein Polymethylenpolyphenylpolyisocyanat ist.

3. Verfahren gemäß Anspruch 2, dadurch gekennzeichnet, daß das Polyisocyanat wasseremulgierbar modifiziert ist.

4. Verfahren gemäß Ansprüchen 1 bis 3, dadurch gekennzeichnet, daß die Menge an eingesetzten Polyisocyanaten 1 - 10 Gew.-%, bezogen auf das Gesamtgewicht der trockenen Einsatzstoffe (Gipsbindemittel und Bewehrungsstoffe), beträgt.

5. Verfahren gemäß Ansprüchen 1 bis 4, dadurch gekennzeichnet, daß man die Gipsplatten mit den Polyisocyanaten nur in einer Randzone durch Aufbringen auf die Oberfläche von gefertigten Gipsplatten mit Polyharnstoffen modifiziert.

6. Gipsplatten auf Basis von Gips-Halbhydrat, Polyisocyanaten und Holzspäne mit einer Länge von 1 - 10 mm, wobei das Gewichtsverhältnis von Holzspäne zu Gips-Halbhydrat 0,25 : 1 bis 0,35 : 1 beträgt, mit homogener Verteilung der aus den Polyisocyanaten sich bildenen Polyharnstoffe über den Plattenquerschnitt oder unter Anreicherung in den Plattenrandzonen.

## Claims

1. A process for the manufacture of reinforced plasterboards by mixing gypsum hemihydrate, water and wood chips and thereafter pressing the resulting mixture, characterised in that polyisocyanates are added to the mixture used for producing the plasterboards and/or applied to the surface of finished platerboards and in that wood chips having a length of from 1 to 10 mm are used and the ratio by weight of wood chips to gypsum hemihydrate is from 0.25 : 1 to 0.35 : 1.

2. The process according to claim 1, characterised in that the polyisocyanate is a polymethylene polyphenyl polyisocyanate.

3. Process according to claim 2, characterised in that the polyisocyanate is modified to render it emulsifiable in water.

4. Process according to claims 1 to 3, characterised in that the quantity of polyisocyanates put into the process is from 1 to 10% by weight, based on the total weight of dry starting materials (gypsum binder and reinforcing materials).

5. Process according to claims 1 to 4, characterised in that the plasterboards are polyurea-modified by means of the polyisocyanates only in a marginal zone by application to the surface of the finished plasterboards.

6. Plasterboards based on gypsum hemihydrate, polyisocyanates and wood chips having a length of from 1 to 10 mm, the ratio by weight of wood chips to gypsum hemihydrate being from 0.25 : 1 to 0.35 : 1, with homogeneous distribution of the polyureas formed from the polyisocyanates over the cross-section of the boards and with greater accumulation in the marginal zones of the boards.

**Revendications**

1. Procédé de fabrication de carreaux de plâtre renforcés, par mélange de semi-hydrate de plâtre, d'eau ainsi que de copeaux de bois et compression subséquente du mélange obtenu, caractérisé en ce qu'on ajoute des polyisocyanates au mélange pour la fabrication des carreaux de plâtre et/ou qu'on les dépose à la surface de carreaux de plâtre fabriqués et qu'on utilise des copeaux de bois de 1 à 10 mm de long et que le rapport en poids des copeaux de bois au semi-hydrate de plâtre est compris entre 0,25 : 1 et 0,35 : 1.

2. Procédé selon la revendication 1, caractérisé en ce que le polyisocyanate est un polyméthylène-polyphényle-polyisocyanate.

3. Procédé selon la revendication 2, caractérisé en ce que le polyisocyanate est rendu émulsionnable dans l'eau par modification.

4. Procédé selon les revendications 1 à 3, caractérisé en ce que la quantité de polyisocyanates utilisés est comprise entre 1 à 10 % en poids, par rapport au poids total des substances sèches utilisées (liant du plâtre et substances formant l'armature).

5. Procédé selon les revendications 1 à 4, caractérisé en ce qu'on modifie les carreaux de plâtre à l'aide des polyisocyanates dans la zone de leurs bords uniquement, par application de polycarbamides à la surface de carreaux de plâtre fabriqués.

6. Carreaux de plâtre à base de semi-hydrate de plâtre, de polyisocyanates et de copeaux de bois de 1 à 10 mm de long, le rapport en poids des copeaux de bois au semi-hydrate de plâtre étant compris entre 0,25 : 1 et 0,35 : 1, avec répartition homogène des polycarbamides se formant à partir des polyisocyanates sur la section des carreaux ou accumulation dans les zones des bords des carreaux.